# EUROPEAN PATENT SPECIFICATION

(11) **EP 4 050 061 B1**
(45) Date of publication and mention of the grant of the patent: **15.10.2025**
(21) Application number: 21159691.1
(22) Date of filing: 26.02.2021
(51) Int. Cl.: C08G 59/24, C08G 59/32, C08G 59/36, C08G 59/40, C08J 3/24, C08G 65/10, C08G 65/18, C08J 3/28, C09J 11/04, C09J 11/06, C09J 163/00

(54) **NEAR-INFRARED (NIR) SENSITIZED ADHESIVE AND SEALANT COMPOSITIONS**
IM NAHINFRAROTBEREICH (NIR) SENSIBILISIERTE KLEB- UND DICHTSTOFFZUSAMMENSETZUNGEN
ADHÉSIF SENSIBILISÉ INFRAROUGE PROCHE (NIR) ET COMPOSITIONS DE PRODUIT D'ÉTANCHÉITÉ

(43) Date of publication of application: 31.08.2022
(73) Proprietor: Henkel AG & Co. KGaA, 40589 Düsseldorf (DE)
(72) Inventor: Niegemeier, Andreas, 40764 Langenfeld (DE); Robijns, Elke, 3980 Tessenderlo (BE); Ganfoud, Rime, 2440 Geel (BE)

(56) References cited:
- EP-A1- 1 757 635
- EP-A1- 3 628 697
- EP-A1- 3 647 337
- CN-A- 108 546 536
- JP-A- 2004 196 977
- US-A1- 2007 109 382
- US-A1- 2008 146 693
- PANG YULIAN ET AL: "NIR-Sensitized Cationic and Hybrid Radical/Cationic Polymerization and Crosslinking", ANGEWANDTE CHEMIE INTERNATIONAL EDITION, vol. 60, no. 3, 16 November 2020 (2020-11-16), DE, pages 1465 - 1473, XP055818311, ISSN: 1433-7851, Retrieved from the Internet <URL:https://onlinelibrary.wiley.com/doi/full-xml/10.1002/anie.202010746> DOI: 10.1002/anie.202010746

## Description

### FIELD OF THE INVENTION

The present invention is concerned with adhesive and sealant compositions which may have utility in optoelectronic and opto-mechanical devices. More particularly, the present invention is concerned with near-infrared (nIR) sensitized adhesive and sealant compositions which are based on oxetane and cycloaliphatic epoxide monomers.

### BACKGROUND TO THE INVENTION

Radiation curable materials have found utility as coatings, adhesives and sealants. This use has been driven, in part, by the typically low energy consumption of such materials during cure and the materials' rapid cure speed - even at lower temperatures - through either radical or cationic mechanisms. The materials can also often be formulated as solvent-free compositions, offering the potential of reduced volatile organic compound emission upon application. These benefits have made radiation curable materials especially suited for rapidly adhering and sealing electronic and optoelectronic devices that are temperature sensitive or cannot conveniently withstand prolonged curing times. Optoelectronic devices particularly are often thermally sensitive and may need to be optically aligned and spatially immobilized through curing in a very short time period.

Numerous optoelectronic devices are also moisture or oxygen sensitive and need to be protected from exposure during their functional lifetime. A common approach is to seal the device between an impermeable substrate - on which the device is disposed - and an impermeable glass or metal lid, and then to seal or adhere the perimeter of the lid to the bottom substrate using a radiation curable adhesive or sealant. Effective barrier sealants for this purpose will exhibit low bulk moisture permeability, good adhesion and strong interfacial adhesive-substrate interactions.

Where the quality of the substrate to sealant interface is poor, the interface may function as a weak boundary which permits moisture ingress into the device regardless of the bulk moisture permeability of the sealant. Where the interface is at least as continuous as the bulk sealant, then moisture permeation will be determined by the bulk moisture permeability of the sealant itself. In practice, the cured matrix of an adhesive or sealant for optoelectronic or opto-mechanical applications must either have high crosslink density, micro-crystallinity or a close packing of the molecular backbones between cross-linked portions of the matrix: limited molecular mobility of the matrix ensures low permeant mobility or diffusivity.

It is conventional in the art to focus upon the glass transition temperature (Tg) of the cured material as a measure of this utility; sealants and adhesives are formulated to yield Tg values higher than necessary so as to afford suitable tolerances. Certainly, the satisfaction of a high Tg criterion might mean a compromise is made as regards *inter alia* the tensile strength, lap shear strength, adhesive bond strength and modulus. But, that aside, to meet such a thermal criterion, it is important that curing is complete throughout the applied adhesive or sealant material, specifically that shadow curing extends effectively into regions of the applied materials which are not illuminated by the incident initiating light source. Insufficient curing in the shadowed areas exposes components of optoelectronic devices to the risk of corrosion and can also have an undesirable effect on internal light paths. Thus, to obviate the problems of insufficient shadow cure, adhesive or sealants are often formulated to demonstrate thermal or moisture curing in addition to being radiation curable.

US 2008/272328 (Kong) discloses a cationically curable barrier composition for optoelectronic devices, said composition consisting essentially of: (a) an oxetane compound; (b) a cationic initiator; (c) optionally one or more fillers; and, (d) optionally one or more adhesion promoters, or one or more epoxy resins. The loading of the cationic initiator is not determinative of the rate of curing under irradiation with actinic radiation. For the tested ratios of epoxy resin to oxetane in the disclosed compositions, the optimum curing conditions included a temperature above 130°C.

US2005061429 A1 (Hosaka) discloses an actinic radiation curable adhesive which comprises, based on the weight of the composition: from 50 to 99 wt.% of a bifunctional and / or a polyfunctional oxetane compound; from 0 to 40 wt.% of a monofunctional oxetane compound; from 1 to 50 wt. % of an epoxy compound having a cyclic structure; and, a catalytic amount of a photoinitiator. This citation purports to require only the exposure of the applied composition to actinic radiation for complete cure. However, it is noted that the gel points of the compositions after cure can be up to 30 minutes at room temperature: this may be inappropriate for those applications where the adhesive bond needs to be set more rapidly. The artisan must resort to elevated curing temperatures in such instances.

US2003062125 A1 (Takamatsu et al.) discloses a photo-cationic-curable resin composition having utility as a sealant for a liquid crystal display or an electroluminescent display, which composition comprises: (a) a cationic-polymerizable compound; (b) a photo-cationic initiator; and, (c) an aromatic ether compound or an aliphatic thioether compound. The exemplified compositions are cured under irradiation with a high intensity metal halide lamp but complete conversion of the constituent monomers is not achieved.

DE102009012272A1 (Wellmann) discloses a dual-curing adhesive for use in opto-mechanical and opto-electronic devices, said adhesive composition comprising: at least one monomeric, UV-curable adhesive component; at least one photoinitiator; a component possessing free isocyanate groups or free silane-containing component; and, a primary, secondary and / or tertiary amine.

EP3647337A1 discloses a curable composition comprising: a cationic polymerizable compound; a thermal polymerization initiator; and a storage stabilizer, wherein the cationic polymerizable compound includes at least two selected from the group consisting of a glycidyl ether compound, an alicyclic epoxy compound, and an oxetane compound, a content of the thermal polymerization initiator is 0.3 to 3 parts by mass with respect to 100 parts by mass of the cationic polymerizable compound, and chain curing is enabled by thermal energy generated by a polymerization reaction of the cationic polymerizable compound.

EP1757635A1 discloses a curable composition comprising a compound having a single partial structure containing a 4- or more-membered cyclic ether represented by the following formula (I) and a partial structure represented by the following formula (II): 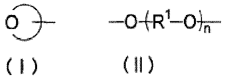 wherein in formula (II), R 1 represents an alkylene group, a cycloalkylene group or an arylene group, and n represents an integer of 1 to 8.

The present inventors consider that a need in the art exists to provide photo-curable adhesive or sealant compositions - having utility in optoelectronic devices - which can be substantially cured without the need for a thermal curing step subsequent to irradiation of the composition with actinic radiation. It would be desirable to develop compositions which do not exhibit deleteriously low glass transition temperatures (Tg) upon exposure only to actinic irradiation.

### STATEMENT OF THE INVENTION

In accordance with a first aspect of the present invention, there is provided a photo-curable adhesive or sealant composition comprising, based on the weight of the composition:
from 5 to 10 wt.% of a) at least one oxetane compound according to Formula (I) below: 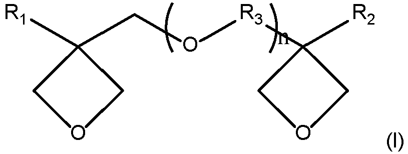 wherein:
   R¹ and R² are H, C₁-C₆ alkyl, C₆-C₁₈ aryl or C₇-C₁₈ aralkyl;
   each R³ is independently a C₁-C₁₂ alkylene group, C₆-C₁₈ arylene group, C₂-C₁₂ alkenylene group or a poly(C₁-C₆ alkyleneoxy) group; and,
   n is an integer of from 1 to 3;
from 5 to 15 wt.% of b) at least one epoxide compound, wherein part b) is characterized in that at least 50 wt.% of the total weight of epoxide compounds is constituted by b1) at one cycloaliphatic epoxide;
from 0.1 to 5 wt.% of c) at least one ionic photoacid generator;
from 0.1 to 10 wt.% of d) at least one free radical photoinitiator;
from 0.01 to 1 wt.% of e) at least one near-infrared absorbing dye; and,
from 50 to 80 wt.% of f) particulate filler.

The presence of the near-infrared absorbing dye facilitates the curing of the present application upon exposure to near-infrared (nIR) radiation. Whilst such nIR radiation may be used alone for curing, irradiation of the compositions with other actinic radiation may also be applied, either prior to, simultaneously with or subsequent to nIR irradiation. Under such curing conditions, the cured adhesives or sealants of the present invention should possess *de minimis* residual enthalpy and demonstrate high monomer conversion, for instance greater than 85% monomer conversion. Moreover, in tests, the compositions have shown advantageous cure depths without the need for a thermal curing step.

In accordance with a second aspect of the present invention there is provided a bonded structure comprising: a first material layer; and, a second material layer, wherein a cured adhesive composition as defined hereinabove and in the appended claims is disposed between and contacts said first and second material layers.

The present invention also provides for the use of the adhesive or sealant composition as defined hereinabove and in the appended claims in an optoelectronic or opto-mechanical device.

### DEFINITIONS

As used herein, the singular forms "*a*", "*an*" and "*the*" include plural referents unless the context clearly dictates otherwise.

The terms "*comprising*", "*comprises*" and "*comprised o*f" as used herein are synonymous with "*including*", "*includes*", "*containing*" or "*contains*", and are inclusive or open-ended and do not exclude additional, non-recited members, elements or method steps.

As used herein, the term "*consisting of*" excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to* x" specifically includes 0 wt.%: the ingredient defined by said range may be absent from the composition or may be present in the composition in an amount up to x wt.%.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "*ambient conditions*" means the temperature and pressure of the surroundings in which the composition is located or in which a coating layer or the substrate of said coating layer is located.

The molecular weights referred to in this specification - to describe to macromolecular, oligomeric and polymeric components of the curable compositions - can be measured with gel permeation chromatography (GPC) using polystyrene calibration standards, such as is done according to ASTM 3536.

Viscosities of the coating compositions described herein are, unless otherwise stipulated, measured using a rheometer at standard conditions of 20°C and 50% Relative Humidity (RH). The method of calibration of the rheometer would be chosen according to the instructions of the manufacturer as appropriate for the composition to be measured.

As used herein, "*average particle size (D50)*" refers to a particle diameter corresponding to 50% of the particles in a distribution curve in which particles are accumulated in the order of particle diameter from the smallest particle to the largest particle and a total number of accumulated particles is 100%.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature.

The actual glass transition temperature (T_{g}) of a polymer can be determined by Dynamic Mechanical Thermal Analysis (DMTA). The glass transition temperatures (T_{g}) specifically measured in the current patent application have been measured by DMTA according to the methodology of the International Organization for Standardization (ISO) Standards ISO6721-1 and ISO6721-11.

As used herein, "*near-infrared (nIR) radiation*" refers to electromagnetic radiation - such as that emitted by a laser or a light emitting diode (LED) - with a wavelength of from 700 to 1500 nm. A nonlimiting example of such near-infrared radiation is the light emitted by diode lasers, which are equipped with plate-setters and which are available from Creo-Kodak, Dinippon Screen, Heidelberg and Presstek International. Further exemplary sources of nIR radiation are FireJet^{™} and FireEdge^{™} LED lamps available from Phoseon Technology Inc. As regards the compositions of the present invention, a preference may noted for irradiation with nIR radiation having a wavelength of from 780 to 980 nm.

As used herein, a "*near-infrared (nIR) absorbing dye*" is a compound, complex or molecule which has substantial light absorbtivity in the wavelength range of from 700 nm to 1500 nm.

As used herein, the term "*monomer*" refers to a substance that can undergo a polymerization reaction to contribute constitutional units to the chemical structure of a polymer. The term "*monofunctional*", as used herein, refers to the possession of one polymerizable moiety. The term "*polyfunctional*", as used herein, refers to the possession of more than one polymerizable moiety.

As used herein, the term "*equivalent (eq*.*")* relates, as is usual in chemical notation, to the relative number of reactive groups present in the reaction. The term "*milliequivalent*" (*meq*) is one thousandth (10⁻³) of a chemical equivalent.

The term "*equivalent weight*" as used herein refers to the molecular weight divided by the number of a function concerned. As such, "*epoxy equivalent weight*" (EEW) means the weight of resin, in grams, that contains one equivalent of epoxy: this parameter may be determined by the Shell Analytical Method HC427D-89 using perchloric acid titration.

The oxetane and epoxide compounds herein undergo "*ring-opening polymerization*" by which is meant a polymerization in which a cyclic compound (*monomer*) is opened to form a linear polymer in the presence of an appropriate catalyst. The reaction system tends towards an equilibrium between the desired resulting high-molecular compounds, a mixture of cyclic compounds and / or linear oligomers, the attainment of which equilibrium largely depends on the nature and amount of the cyclic monomers, the catalyst used and on the reaction temperature. The use of solvents and / or emulsions in the polymerization is not recommended as their removal once the reaction is complete can be complex.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine and phenyl.

The term "*photoinitiator*" as used herein denotes a compound which can be activated by an energy-carrying activation beam - such as electromagnetic radiation - for instance upon irradiation therewith. The term is intended to encompass free radical photoinitiators and both photoacid generators and photobase generators. Specifically, the term "*photoacid generator*" refers to a compound or polymer which generates an acid for the catalysis of the acid-hardening resin system upon exposure to actinic radiation. The term "*photobase generator*" means any material which when exposed to suitable radiation generates one or more bases.

The term "*Lewis acid*" used herein denotes any molecule or ion - often referred to as an electrophile - capable of combining with another molecule or ion by forming a covalent bond with two electrons from the second molecule or ion: a Lewis acid is thus an electron acceptor.

As used herein, "*C₁*-*Cₙ alkyl*" group refers to a monovalent group that contains 1 to n carbons atoms, that is a radical of an alkane and includes straight-chain and branched organic groups. As such, a "*C₁-C₁₈ alkyl*" group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "*C₁-C₆hydroxyalky*" as used herein refers to a HO-(alkyl) group having from 1 to 6 carbon atoms, where the point of attachment of the substituent is through the oxygen-atom and the alkyl group is as defined above.

An "*alkoxy group*" refers to a monovalent group represented by -OA where A is an alkyl group: nonlimiting examples thereof are a methoxy group, an ethoxy group and an iso-propyloxy group. The term "*C₁*-*C₁₈ alkoxyalkyl*" as used herein refers to an alkyl group having an alkoxy substituent as defined above and wherein the moiety (*alkyl-O-alkyl*) comprises in total from 1 to 18 carbon atoms: such groups include methoxymethyl (-CH₂OCH₃), 2-methoxyethyl (-CH₂CH₂OCH₃) and 2-ethoxyethyl.

The term "*C₁*-*C₁₂ alkylene*" as used herein, is defined as saturated, divalent hydrocarbon radical having from 1 to 12 carbon atoms. By extension, the term "C₁-C₆ *alkyleneoxy"* refers to a divalent group -R-O-, in which R is C₁-C₆ alkylene.

The term "*C₃* -*C₁₈ cycloalkyl*" is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl*" group used alone or as part of a larger moiety - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; indenyl; naphthalenyl, tetrahydronaphthyl, tetrahydroindenyl; tetrahydroanthracenyl.

The term "*C₆-C₁₈ arylene group*" as used herein refers to a divalent radical having from 6 to 18 carbon atoms and which is derived from an monocyclic, bicyclic and tricyclic ring systems in which the monocyclic ring system is aromatic or at least one of the rings in a bicyclic or tricyclic ring system is aromatic. The arylene group may be substituted by at least one halogen substituent but the aromatic portion of the arylene group includes carbon atoms only. Exemplary "*C₆-C₁₈ arylene*" groups include phenylene and naphthalene-1,8-diyl.

The term "*aryloxy*" as used herein denotes an O-aryl group, wherein aryl is as defined above. In the present invention, such aryloxy groups may be unsubstituted or may be substituted with one or more halogen.

The term "*aralkyl group*" refers to group in which an aryl group - as defined above - is substituted for at least one hydrogen atom of an alkyl group, also as defined above. For completeness, such aralkyl groups may be unsubstituted or may be substituted with one or more halogen.

The term "*aralkylene*" as used herein refers to a divalent radical in which an aryl group is substituted for at least one hydrogen atom of the above-defined alkylene group. The aralkylene group may be substituted by at least one halogen substituent.

As used herein, "*alkylaryl*" refers to alkyl-substituted aryl groups. Further, the term "*alkarylene*" denotes a divalent radical being an alkyl substituted aryl radical, wherein one hydrogen at any position of the alkyl carbon backbone is replaced by a further binding site. Examples of alkarylene groups include methylphenylene and ethylphenylene.

An "*aralkoxy*" group, as used herein, is an aralkyl group that is attached to a compound via an oxygen substituent on the alkyl portion of the aralkyl. Exemplary arylalkoxy groups are phenylmethoxy and phenylethoxy.

As used herein, "*C₂-C₂₄ alkenyl*" refers to hydrocarbyl groups having from 2 to 24 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "*cis*" and "*trans*" configurations, or alternatively, "*E*" and "*Z*" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃; -CH₂CH=CH₂; -C(=CH₂)(CH₃); - CH=CHCH₂CH₃; -CH₂CH=CHCH₃; -CH₂CH₂CH=CH₂; -CH=C(CH₃)₂; -CH₂C(=CH₂)(CH₃); - C(=CH₂)CH₂CH₃; -C(CH₃)=CHCH₃; -C(CH₃)CH=CH₂; -CH=CHCH₂CH₂CH₃; - CH₂CH=CHCH₂CH₃, -CH₂CH₂CH=CHCH₃; -CH₂CH₂CH₂CH=CH₂; -C(=CH₂)CH₂CH₂CH₃; - C(CH₃)=CHCH₂CH₃; -CH(CH₃)CH=CHCH; -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, "*C₂-C₁₂ alkenylene*" refers to di-radical groups having from 2 to 24 carbon atoms and at least one unit of ethylenic unsaturation. The alkenylene radical can be straight chained, branched or cyclic and may optionally be substituted with one or more halogen. Where applicable for a given moiety (R), a tolerance for one or more non-halogen substituents within an alkenylene radical will be noted in the specification. The term "alkenylene" also encompasses radicals having "*cis*" and "*trans*" configurations, or alternatively, "*E*" and "*Z*" configurations, as appreciated by those of ordinary skill in the art. Examples of said C₂-C₁₂ alkenyl groups include, but are not limited to:
ethenylene; ethen-1,1-diyl; propenylene; propen-1,1-diyl; prop-2-en-1,1-diyl; 1-methyl-ethenylene; but-1-enylene; but-2-enylene; but-1,3-dienylene; buten-1,1-diyl; but-1,3-dien-1,1-diyl; but-2-en-1,1-diyl; but-3-en-1,1-diyl; 1-methyl-prop-2-en-1,1-diyl; 2-methyl-prop-2-en-1,1-diyl; 1-ethyl-ethenylene; 1,2-dimethyl-ethenylene; 1-methyl-propenylene; 2-methyl-propenylene; 3-methyl-propenylene; 2-methyl-propen-1,1-diyl; and, 2,2-dimethyl-ethen-1,1-diyl.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The present compositions may be defined herein as being "*substantially free*" of certain compounds, elements, ions components. The term "*substantially free*" is intended to mean that the compound, element, ion component is not deliberately added to the composition and is present, at most, in only trace amounts which will have no (adverse) effect on the desired properties of the coating. An exemplary trace amount is less than 1000 ppm by weight of the composition. The term "*substantially free*" encompasses those embodiments where the specified compound, element, ion is completely absent from the composition or is not present in any amount measurable by techniques generally used in the art.

### DETAILED DESCRIPTION OF THE INVENTION

### a) Oxetane Compounds

The composition of the present invention comprises from 5 to 10 wt.%, based on the weight of the composition of a) at least one oxetane compound according to Formula (I) below: 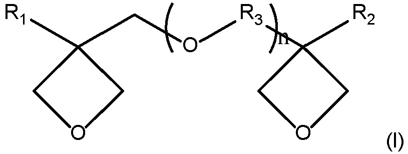 wherein:
R¹ and R² are H, C₁-C₆ alkyl, C₆-C₁₈ aryl or C₇-C₁₈ aralkyl;
each R³ is independently a C₁-C₁₂ alkylene group, C₂-C₁₂ alkenylene group or a poly(C₁-C₆ alkyleneoxy) group; and,
n is an integer of from 1 to 3.

In an embodiment of the invention, the composition may comprise an oxetane of Formula (IA) 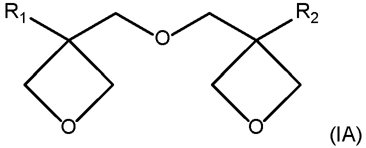 wherein: R¹ and R² are as defined above.

Within this embodiment, a preference may be noted for R¹ and R² being a C₁-C₆ alkyl. Whilst R¹ and R² may be the same or different, it is preferred that they are the same. An exemplary compound in accordance with Formula IA is bis[1-ethyl-3-oxentanyl)methyl]ether.

In another embodiment of the invention, which is not intended to be mutually exclusive of that given above, the composition may comprise an oxetane compound of Formula (IB): 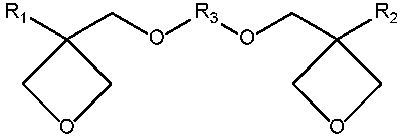 wherein: R¹, R² and R³ are as defined above.

Within this embodiment, it is preferred that: R¹ and R² are C₁-C₆ alkyl; and, R³ is a C₁-C₆ alkylene. For example: R¹ and R² are the same and are C₁-C₄ alkyl; and, R³ is a C₁-C₄ alkylene. An exemplary compound in accordance with Formula (IAA) is 1,4-Bis[(3-ethyl-3-oxetanylmethoxy)methyl]benzene.

### b) Epoxide Compounds

The composition of the present invention comprises from 5 to 15 wt.%, based on the weight of the composition of b) at least one epoxide compound. As noted above, at least 50 wt.%, based on the total weight of epoxide compounds in the composition is constituted by b1) at one cycloaliphatic epoxide. It is considered that b1) said at least one cycloaliphatic epoxide compound may reasonably constitute at least 65 wt.% and even 100 wt.% of said part b).

### b1) Cycloaliphatic Epoxide Compounds

The or each cycloaliphatic epoxide compound included in the composition comprises at least one epoxy group which may be in the form of: a terminal epoxy group; a glycidyl ether (e.g. -O-CH₂-epoxide); or, an epoxide fused to a C₅₋₇ cycloalkyl group.

Exemplary cycloaliphatic epoxide compounds include: mono-epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; vinylcyclohexene diepoxide; limonene diepoxide; glycidyl ethers of cycloaliphatic alcohols; glycidyl esters of cycloaliphatic monocarboxylic acids; diglycidyl ethers of cycloaliphatic diols, such as cyclopentane diol and cyclohexane diol; and, glycidyl esters of cycloaliphatic polycarboxylic acids, which acids contain at least two carboxylic acid groups and no other groups reactive with epoxide groups.

Without intention to limit the present invention, suitable cycloaliphatic epoxy resins include: cyclohexanedimethanol diglycidyl ether; bis(3,4-epoxycyclohexylmethyl) adipate; bis(3,4-epoxy-6-methylcyclohexylmethyl) adipate; bis(2,3-epoxycyclopentyl) ether; 3,4-epoxycyclohexylmethyl 3',4'-epoxycyclohexanecarboxylate; 1,4-cyclohexanedimethanol diglycidyl ether; diglycidyl 1,2-cyclohexanedicarboxylate; bis(2,3-epoxypropyl)cyclohexane-1,2-dicarboxylate; and, cycloaliphatic epoxy resins obtained by the hydrogenation of aromatic bisphenol A diglycidyl ether (BADGE) epoxy resins.

Preferably the cycloaliphatic epoxy comprises two C₅₋₆ cycloalkyl groups wherein each are independently fused to an epoxide such as bis(3,4-epoxycyclohexylmethyl) adipate, bis(3 4-epoxy-6-methylcyclohexylmethyl) adipate, bis(2,3-epoxycyclopentyl) ether, or 3,4-epoxycyclohexylmethyl-3',4'-epoxycyclohexanecarboxylate.

As commercial cycloaliphatic epoxide compounds mention may be made of: Cyracure^{®} UVR6105, UVR6107, UVR6110 and UVR6128 available from Dow Chemical; Syna Epoxy S-06E available from Synasia; and, Celloxide 2021P, available from Daicel Corporation.

### b2) Aliphatic and Aromatic Epoxide Compounds

The composition of the present invention may optionally comprise, in addition to the cycloaliphatic resins necessarily present, b2) at least one further epoxide compound. Said further epoxide compounds as used herein may include mono-functional epoxy resins, multi- or poly-functional epoxy resins, and combinations thereof. The epoxy resins may be pure compounds but equally may be mixtures of epoxy functional compounds, including mixtures of compounds having different numbers of epoxy groups per molecule. Said further epoxy resin may be saturated or unsaturated, aliphatic, aromatic or heterocyclic and may be substituted. Further, the epoxy resin may also be monomeric or polymeric.

Without intention to limit the present invention, illustrative non-cycloaliphatic monoepoxide compounds include: alkylene oxides; epoxy-substituted aromatic hydrocarbons; monoepoxy substituted alkyl ethers of monohydric alcohols or phenols, such as the glycidyl ethers of aliphatic and aromatic alcohols; monoepoxy-substituted alkyl esters of monocarboxylic acids, such as glycidyl esters of aliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (II) herein below: 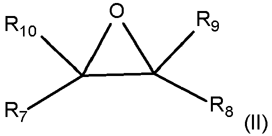 wherein: R⁷, R⁸, R⁹ and R¹⁰ may be the same or different and are independently selected from hydrogen, a halogen atom, a C₁-C₈ alkyl group, a C₂-C₁₂ alkenyl, a C₆-C₁₈ aryl group or a C₇-C₁₈ aralkyl group, with the proviso that at least one of R⁸ and R⁹ is not hydrogen.

It is preferred that R⁷, R⁸ and R¹⁰ are hydrogen and R⁹ is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

Again, without intention to limit the present invention, suitable polyepoxide compounds useful as part b2) may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic or aliphatic in nature and, as such, can be derivable from dihydric phenols and dihydric alcohols. And useful classes of such diglycidyl ethers are: diglycidyl ethers of aliphatic diols, such as 1,2-ethanediol, 1,4-butanediol, 1,6-hexanediol, 1,8-octanediol and 1,12-dodecanediol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; and, polybutadiene diglycidyl ether.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

Glycidyl esters of polycarboxylic acids having utility in the present invention are derived from polycarboxylic acids which contain at least two carboxylic acid groups and no other groups reactive with epoxide groups. The polycarboxylic acids can be aliphatic, aromatic and heterocyclic. The preferred polycarboxylic acids are those which contain not more than 18 carbon atoms per carboxylic acid group of which suitable examples include but are not limited to: oxalic acid; sebacic acid; adipic acid; succinic acid; pimelic acid; suberic acid; glutaric acid; dimer and trimer acids of unsaturated fatty acids, such as dimer and trimer acids of linseed fatty acids; phthalic acid; isophthalic acid; terephthalic acid; trimellitic acid; trimesic acid; phenylene-diacetic acid; chlorendic acid; diphenic acid; naphthalic acid; polyacid terminated esters of di-basic acids and aliphatic polyols; polymers and co-polymers of (meth)acrylic acid; and, crotonic acid.

And illustrative examples of polyepoxide compounds include: bisphenol-A epoxy resins, such as DER^{™} 331, DER^{™} 332, DER^{™} 383, JER^{™} 828 and Epotec YD 128; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; epoxidized phenol novolac resins, such as Epalloy 2850; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

The above aside, part b) of the composition should in certain embodiments comprise glycidoxy alkyl alkoxy silanes having the formula: 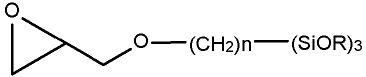 wherein:
each R is independently selected from methyl or ethyl; and,
n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than less than 20 wt.%, preferably less than 10 wt.% or less than 5 wt.%, based on the total weight of the epoxide compounds.

The present invention also does not preclude the curable compositions from further comprising one or more cyclic monomers selected from the group consisting of: cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic comonomers should constitute less than 20 wt.%, preferably less than 10 wt.% or less than 5 wt.%, based on the total weight of the epoxide compounds b).

### c) Ionic Photoacid Generator

The compositions of the present invention include from 0.1 to 5 wt.%, based on the weight of the composition, of c) at least one ionic photoacid generator (PAG). Upon irradiation with light energy, ionic photoacid generators undergo a fragmentation reaction and release one or more molecules of Lewis or Bronsted acid that catalyze the ring opening and addition of the pendent oxetane and epoxide groups to form a crosslink. Useful photoacid generators are thermally stable, do not undergo thermally induced reactions with the forming copolymer and are readily dissolved or dispersed in the curable compositions.

Exemplary cations which may be used as the cationic portion of the ionic PAG of the invention include organic onium cations such as those described in US Patent No. 4,250,311, US Patent No. 3,113,708, US Patent No. 4,069,055, US Patent No. 4,216,288, US Patent No. 5,084,586, US Patent No. 5,124,417, and, US Patent No. 5,554,664. The references specifically encompass aliphatic or aromatic Group IVA and VIIA (CAS version) centered onium salts, with a preference being noted for I-, S-, P-, Se- N- and C-centered onium salts, such as those selected from sulfoxonium, iodonium, sulfonium, selenonium, pyridinium, carbonium and phosphonium.

As is known in the art, the nature of the counter-anion in the ionic photoacid generator (PAG) can influence the rate and extent of cationic addition polymerization of the epoxide groups with, for illustration, the order of reactivity among commonly used nucleophilic anions being SbF₆ > AsF₆ > PF₆ > BF₄. The influence of the anion on reactivity has been ascribed to three principle factors which the skilled artisan should compensate for in the present invention: (1) the acidity of the protonic or Lewis acid generated; (2) the degree of ion-pair separation in the propagating cationic chain; and, (3) the susceptibility of the anions to fluoride abstraction and consequent chain termination.

As exemplary ionic photoacid generators which have utility in the present composition, there may be mentioned: Irgacure^{™} 250, Irgacure^{™} PAG 290 and GSID26-1 available from BASF SE; Cyracure^{™} UVI-6990 and Cyracure^{™} UVI-6974 available from Union Carbide; Degacure^{™} KI 85 available from Degussa; Optomer^{™} SP-55, Optomer^{™} SP-150, and Optomer^{™} SP-170 available from Adeka; GE UVE 1014 available from General Electric; and, SarCat^{™} CD 1012, SarCat^{™} KI-85, SarCat^{™} CD 1010 and CD SarCat^{™} 1011 available from Sartomer.

### d) Free Radical Photoinitiator

The compositions of the present invention may optionally further include a free-radical photoinitiator. For instance, the composition comprise from 0.1 to 10 wt.%, based on the weight of the composition, of d) at least one free radical photoinitiator, which compound initiates the polymerization or hardening of the compositions upon irradiation with actinic radiation. The composition may, for example, comprise from 0.1 to 8 wt.% of said free-radical photoinitiator.

Typically, free radical photoinitiators are divided into those that form radicals by cleavage, known as "Norrish Type I", and those that form radicals by hydrogen abstraction, known as "Norrish Type II". The Norrish Type II photoinitiators require a hydrogen donor, which serves as the free radical source: as the initiation is based on a bimolecular reaction, the Norrrish Type II photoinitiators are generally slower than Norrish Type I photoinitiators which are based on the unimolecular formation of radicals. On the other hand, Norrish Type II photoinitiators possess better optical absorption properties in the near-UV spectroscopic region. The skilled artisan should be able to select an appropriate free radical photoinitiator based on the actinic radiation being employed in curing and the sensitivity of the photoinitiator(s) at that wavelength.

Preferred free radical photoinitiators are those selected from the group consisting of: benzoylphosphine oxides; aryl ketones; benzophenones; hydroxylated ketones; 1-hydroxyphenyl ketones; ketals; and, metallocenes. For completeness, the combination of two or more of these photoinitiators is not precluded in the present invention.

Particularly preferred free radical photoinitiators are those selected from the group consisting of: benzoin dimethyl ether; 1-hydroxycyclohexyl phenyl ketone; benzophenone; 4-chlorobenzophenone; 4-methylbenzophenone; 4-phenylbenzophenone; 4,4'-bis(diethylamino) benzophenone; 4,4'-bis(N,N'-dimethylamino) benzophenone (Michler's ketone); isopropylthioxanthone; 2-hydroxy-2-methylpropiophenone (Daracur 1173); 2-methyl-4-(methylthio)-2-morpholinopropiophenone; methyl phenylglyoxylate; methyl 2-benzoylbenzoate; tert-butyl-peroxybenzoate; 2-ethylhexyl 4-(dimethylamino)benzoate; ethyl 4-(N,N-dimethylamino)benzoate; phenylbis(2,4,6-trimethylbenzoyl)phosphine oxide; diphenyl(2,4,6-trimethylbenzoyl)phosphine oxide; and, ethyl phenyl(2,4,6-trimethylbenzoyl)phosphinate. Again, for surety, the combination of two or more of these photoinitiators is not precluded in the present invention.

Given that the composition of the present invention comprises a free radical photoinitiator, irradiation of said curable compositions generates the active species from the photoinitiator(s) which initiates the cure reactions. Once that species is generated, the cure chemistry is subject to the same rules of thermodynamics as any chemical reaction: the reaction rate may be accelerated by heat. The practice of using thermal treatments to enhance the actinic-radiation cure of monomers is generally known in the art.

The use of the cationic and, optionally, free radical photoinitiators in the present invention may produce residue compounds from the (photo)chemical reaction in the final cured product. The residues may be detected by conventional analytical techniques such as: infrared, ultraviolet and NMR spectroscopy; gas or liquid chromatography; and, mass spectroscopy. Thus, the present invention may comprise cured matrix (co-)polymers and detectable amounts of residues from the cationic and free radical photoinitiators. The residues are present in small amounts and do not normally interfere with the desired physiochemical properties of the final cured product.

As would be recognized by the skilled artisan, photosensitizers can be incorporated into the compositions to improve the efficiency with which photoinitiators - components c) and d) herein - use the energy delivered. The term "*photosensitizer*" is used in accordance with its standard meaning to represent any substance that either increases the rate of photoinitiated polymerization or shifts the wavelength at which polymerization occurs. Photosensitizers should be used in an amount of from 0 to 25 wt.%, based on the total weight of photoinitiators in the composition.

### e) Near-Infrared Absorbing Dye

The present composition comprises at least one near-infrared absorbing dye, which dye should be present in a concentration sufficient to strongly absorb the activating radiation. The requisite or preferred concentration of a given near-infrared absorbing dye will be variant upon both the dye compound itself and on the photoacid generator(s) (PAG) also present. It will, however, be typical for the composition to comprise from 0.01 to 1 wt.% of said near-infrared absorbing dye, based on the weight of the composition.

The skilled artisan will be aware of many near-infrared absorbing dyes. Herein it is preferred to employ those dyes that are un-reactive and un-bleached upon combination with said at least one photoacid generator (PAG) but which bleach upon exposure to activating radiation. Exemplary near-infrared absorbing dyes include but are not limited to: nitroso compounds and metal complex salts thereof; methine dyes; cyanine dyes; merocyanine dyes; complex cyanine dyes; complex merocyanine dyes; holopolar cyanine dyes; hemicyanine dyes; styryl dyes; hemioxonol dyes; squarilium dyes; thiol nickel complex salts, including cobalt, platinum and palladium complex salts; phthalocyanine dyes; triallylmethane dyes; triphenylmethane dyes; indolium dyes, including the borate complexes thereof; xanthenes dyes; fluorescein dyes; rhodol dyes; rhodamine dyes; immonium dyes; diammonium dyes; naphthoquinone dyes; anthroquinone dyes; porphyrin derivative dyes; and, borondipyrromethane (BODIPY) dyes.

Mention may, in particular, be made of the following dyes, which may be used alone or in combination: 3,3'-diethylthiatricarbocyanine iodide ("DTTC"); 1,1'-diethyl-4,4'-carbocyanine iodide (cryptocyanine); indocyanine green (ICG); non-sulfonated cyanine dyes such as cyanine5 (Cy5), cyanine5.5 (Cy5.5), cyanine7 (Cy7) and cyanine7.5 (Cy7.5) available from Lumiprobe; sulfonated cyanine dyes such as sulfo-cyanine5 (Cy5) and sulfo-cyanine7 (Cy7) available from Lumiprobe fluorescein; S0772 indolium tetafluroborate dye available from Few Chemicals (λₘₐₓ = 858nm); S 2514 (CAS No. 2173178-46-4), available from Few Chemicals; methylene blue; cypate; cypate-glucosamine; silicon rhodamine; *5-aminolevulinic acid* (5-ALA); and, IRDye^{®} 700, IRDye^{®} 750, IRDye^{®} 800CW and IRDye^{®} 800RS available from Li-Cor.

### f) Particulate Filler

The composition of the present invention comprises from 50 to 80 wt.%, based on the weight of the composition, of f) particulate filler. The composition may, for instance, contain from 60 to 80 wt.% of particulate filler, based on the weight of the composition.

The desired viscosity of the curable composition formed may be determinative of the amount of filler used. Having regard to that latter consideration, the total amount of fillers should not prevent the composition from being readily applicable by the elected method of application to the composition to a substrate. For example, photocurable compositions of the present invention which are intended to be applicable to a specific locus by printing or injection should possess a viscosity of from 1000 to 50,000, preferably from 10,000 to 20,000 mPas.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have an average particle size (d50), as measured by laser diffraction / scattering methods, of from 0.1 to 1000 µm, for example from 1 to 500 µm.

Exemplary fillers include but are not limited to graphite, carbon black, calcium carbonate, calcium oxide, calcium chloride, calcium hydroxide (lime powder), calcium sulphate, fused silica, amorphous silica, precipitated and/or pyrogenic silicic acid, zeolites, bentonites, wollastonite, magnesium carbonate, magnesium sulphate, diatomite, barium sulfate, barium oxide, alumina, aluminium nitride, boron nitride, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers: poly(tetrachloroethylene), poly(chlorotrifluoroethylene) and poly(vinylidene chloride) powders may also be used. And short fibers such as glass fibers, glass filament, polyacrylonitrile, carbon fibers, Kevlar fibers, or polyethylene fibers can also be added.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

The use of core-shell rubber particles as filler is also not precluded. The term "*core shell rubber*" or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The core-shell rubber may be selected from commercially available products, examples of which include: Paraloid TMS-2670J, EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

Fillers which impart thixotropy to the composition may be preferred for many applications: such fillers are also described as rheological adjuvants, e.g. hydrogenated castor oil, fatty acid amides, or swellable plastics such as PVC.

In an embodiment of the present invention, part e) of the composition comprises or consists of amorphous silica particles having an average particle diameter (d50) of from 5 to 100 µm, for instance from 5 to 50 µm, as measured by laser diffraction / scattering methods. For illustrative purposes, the use of the commercial grades of amorphous silica marketed under the tradename Denka FB may be mentioned.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: tougheners; plasticizers; stabilizers including UV stabilizers; antioxidants; reactive diluents; drying agents or moisture scavengers; adhesion promoters; fungicides; flame retardants; rheological adjuvants; color pigments or color pastes; and/or optionally also, to a small extent, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 30 wt.% of the total composition and preferably should not comprise more than 15 wt.% of the composition.

A "*plasticizer*" for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, adipic acid, sebacic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

"*Stabilizers*" for purposes of this invention are to be understood as antioxidants, UV stabilizers, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Whilst the use of epoxy functional silanes has been mentioned above in part b), it is further noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; and, aromatic hydrocarbon resins especially those containing phenol groups, such as ethoxylated or propoxylated phenols.

The above aside, it is preferred that said non-reactive diluents constitute *in toto* less than 10 wt.%, in particular less than 5 wt.% or less than 2 wt.%, based on the total weight of the composition.

### METHODS AND APPLICATIONS

To form the defined curable compositions, the parts are brought together and mixed. It is important that the mixing homogenously distributes the ingredients within the adhesive composition: such thorough and effective mixing can be determinative of a homogeneous distribution of any constituent particulate filler or other adjunct material within the polymer matrix obtained following curing.

As is known in the art, to form the curable compositions, the elements of the composition are brought together and homogeneously mixed under conditions which inhibit or prevent the reactive components from reacting: such conditions would be readily comprehended by the skilled artisan. As such, it will often be preferred that the curative elements are not mixed by hand but are instead mixed by machine - a static or dynamic mixer, for example - in pre-determined amounts without intentional photo-irradiation.

In accordance with the broadest process aspects of the present invention, the above described compositions are applied to the material layer(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water.

In some embodiments, the adhesion of the compositions of the present invention to the preferably pre-treated substrate may be facilitated by the application of a primer thereto. Indeed primer compositions may be necessary to ensure efficacious fixture and / or cure times of the adhesive compositions on inactive substrates. The skilled artisan will be able to select an appropriate primer.

The compositions are then applied to the optionally pre-treated, optionally primed surfaces of the substrate by conventional application methods such as: printing methods, including screen printing; pin transfer; and, syringe application, including by electro-pneumatically controlled syringes. It is recommended that the compositions be applied to a surface at a wet film thickness of from 10 to 700 µm. The application of thinner layers within this range is more economical and provides for a reduced likelihood of deleterious thick cured regions. However, great control must be exercised in applying thinner coatings or layers so as to avoid the formation of discontinuous cured films.

In the present invention, an energy source emitting near infrared (nIR) radiation is necessarily used in the curing of the applied compositions. The total amount of near infrared (nIR) radiation necessary to satisfactorily cure an individual adhesive or sealant composition - such that said adhesive or sealant becomes fixed, for example - will depend on a variety of factors including the angle of exposure to the radiation and the thickness of the adhesive or sealant layer. Broadly, however, an irradiance of near infrared (nIR) radiation of from 1 to 20 W/cm² may be cited as being typical: curing irradiances of from 1 to 15 W/cm², such as from 5 to 15 W/cm² may be considered highly effective. Subsequent to their application, the photocurable adhesive compositions may typically be activated in less than 5 minutes, and commonly between 1 and 60 seconds - for instance between 3 and 20 seconds - when irradiated using commercial curing equipment.

The use of near infrared (IR) radiation in the above manner does not preclude the use of further energy sources which might emit at least one of ultraviolet (UV) radiation, mid-infrared (IR) radiation, far-infrared (IR) radiation, visible light, X-rays, gamma rays, or electron beams (e-beam). Such supplementary irradiation may be used as a tool to effect a satisfactory cure under the prevailing laboratory, commercial or industrial condition but is not considered essential. The supplementary irradiation may be applied before, during and / or after the irradiation of the applied composition with near infrared (IR) irradiation.

When used, irradiating ultraviolet light should typically have a wavelength of from 150 to 600 nm and preferably a wavelength of from 200 to 450 nm. Useful sources of UV light include, for instance, extra high pressure mercury lamps, high pressure mercury lamps, medium pressure mercury lamps, low intensity fluorescent lamps, metal halide lamps, microwave powered lamps, xenon lamps, UV-LED lamps and laser beam sources such as excimer lasers and argon-ion lasers.

Where an e-beam is utilized to cure the applied coating(s), standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The purpose of irradiation is to generate the active species from the photoinitiator which initiates the cure reactions. Once that species is generated, the cure chemistry is subject to the same rules of thermodynamics as any chemical reaction: the reaction rate may be accelerated by heat or retarded by lower temperatures. Without intention to limit the present invention, the complete curing of the applied curable compositions should typically occur at temperatures in the range of from 20°C to 50°C, preferably from 20°C to 40°C. Where applicable, the temperature of the curable compositions may be raised above the mixing temperature and / or the application temperature using conventional means, including microwave induction.

There is no particular intention to limit the substrates to which the adhesive or sealant compositions of the present invention may be applied. The skilled artisan will, it is considered, be aware of those substrates conventionally found in opto-electronic devices or opto-mechanical devices. However, reference may be made to: polymers, such as polyvinylchloride, polyolefins and polycarbonates; carbon and nano-carbon substrates; metals, such as Al, Pb, Sn, Ge, Si, Ti, Bi, In, Ni and Fe; anodized metals, in particular anodized aluminium; alloys, such as brass and stainless steel; semiconductor materials, such as Si, GaAs, InP, GaP, GaSb, and InAs; ceramics including silica, zirconia, ceramic ferrules, piezoelectric ceramics and dielectric ceramics; and, glasses, including FTO/ITO glass, glass-polymer hybrid materials and glasses modified with conductive layers thereon.

The following examples are illustrative of the present invention and are not intended to limit the scope of the invention in any way.

### EXAMPLES:

The following commercial compounds are used in the Examples:

| | |
|---|---|
| Celloxide 2021P: | 3,4-Epoxycyclohexylmethyl-3',4'epoxycyclohexanecarboxylate, available from Daicel Corporation. |
| Epalloy 8250: | Epoxidized phenol novolac with an average functionality of 2.65, available from Huntsman Advanced Materials. |
| Oxetane OXT-221: | bis[1-Ethyl(3-oxetanyl)]methyl ether, available from Sanyo Corporation. |
| TMPO: | 3-ethyl-3-oxetanemethanol, available from Sanyo Corporation. |
| Bluesil PI 2074: | (tolylcumyl) iodonium tetrakis (pentafluorophenyl) borate, available from Elkom Silicones. |
| Denka FB 35: | Fused silica, spherical, available from Denka Company Limited |
| Silquest A-187: | Epoxy functional silane, available from Momentive Performance Materials. |
| Cab-O-Sil TS 720: | Fumed silica, available from Cabot Corporation. |
| Darocur 1173: | 2-hydroxy-2-methyl-1-phenyl-propan-1-one, available from Ciba Specialty Chemicals |
| Benzopicanol: | 1,1,2,2-tetraphenylethane-1,2-diol, available from Alfa Aesar. |
| Trigonox C: | tert-butyl-peroxybenzoate, available from Nouryon. |
| S2514: | Enolate nIR dye, available from Few Chemicals (λₘₐₓ = 825 nm, CAS No. 2173178-46-4) |
| Monarch 430: | Carbon Black, available from Cabot Corporation. |

Formulations A-I were prepared in accordance with the compositional information provided in Table 1 below. The notation "FM." in Tables 1 and 2 denotes a formulation in accordance with the present invention. The notation "CF." in Tables 1 and 2 denotes a Comparative Formulation.

**Table 1**

| Ingredient | FM. A (wt.%) | FM. B (wt.%) | FM. C (wt.%) | FM. D (wt.%) | FM. E (wt.%) | CF. F (wt.%) | CF. G (wt.%) | CF. H (wt.%) | CF. I (wt.%) |
|---|---|---|---|---|---|---|---|---|---|
| Celloxide 2021P | 5.7 | 5.7 | 5.7 | 9.0 | 9.4 | 9.4 | 5.7 | 9.0 | 9.4 |
| Epalloy 8250 | | | | 4.5 | | | | 4.5 | |
| Oxetane OXT-221 | 5.7 | 5.7 | 5.7 | 7.1 | 7.5 | 7.5 | 5.7 | 7.1 | 7.5 |
| TMPO | 5.7 | 5.7 | 5.7 | 1.8 | 1.9 | 1.9 | 5.7 | 1.8 | 1.9 |
| Bluesil PI2074 | 0.6 | 0.6 | 0.6 | 0.5 | 0.6 | 0.6 | 0.6 | 0.5 | 0.6 |
| Darocur 1173 | 0.4 | 0.4 | 0.4 | 0.4 | 0.4 | 0.4 | 0.4 | 0.4 | 0.4 |
| Silquest A-187 | 0.2 | 0.2 | 0.3 | 0.2 | 0.2 | 0.2 | 0.3 | 0.2 | 0.2 |
| Denka FB 35 | 79.2 | 79.2 | 79.2 | 74.2 | 77.6 | 77.1 | 79.2 | 74.2 | 77.6 |
| Cab-O-sil TS720 | 2.1 | 2.1 | 2.1 | 2.0 | 2.1 | 2.1 | 2.1 | 2.0 | 2.1 |
| Benzopicanol | 0.1 | | | | | | | | |
| Trigonox C | | 0.1 | | | | | | | |
| S2514 | 0.3 | 0.3 | 0.3 | 0.3 | 0.3 | | | | |
| Monarch 430 | | | | | | 0.8 | | | |

### Methodology for Formulations A-E and G-I:

Where applicable, the nIR dye (S2514) was weighed into a speedmixer cup to which was then added TMPO, OXT-221 and, where applicable, benzopicanol. The cup was held at 60°C for 30 minutes after which was added A-187, Darocur 1173, Epalloy 8250 if applicable and 50% by weight of the Cab-O-Sil 720: the contents of the cup were mixed by hand and then subsequently speed-mixed for 2 minutes at 2800 rpm. The remainder of the Cab-O-Sil 720 was added and the contents again mixed by hand and speed-mixed for 2 minutes at 2800 rpm. In three doses, the Denka FB 35 was added, with each addition requiring both stirring by hand and stirring for 1 minute at 1800 rpm. The obtained mixture was permitted to cool down before the addition of PI2074 and, where applicable, Trigonox C. The mixture was degassed and speed-mixed for 1 minute at 800 rpm to remove entrained air.

### Methodology for Formulation F:

A-187, Darocur 1173, TMPO, OXT-221 and 2021P were weighed into a speedmixer cup to which was then added 50% by weight of the Cab-O-Sil 720: the contents of the cup were mixed by hand and then subsequently speed-mixed for 2 minutes at 2800 rpm. The remainder of the Cab-O-Sil 720 was added and the contents again mixed by hand and speed-mixed for 2 minutes at 2800 rpm. The carbon black was added and the contents further mixed by hand and speed-mixed for 2 minutes at 2800 rpm. In three doses, the Denka FB 35 was added, with each addition requiring both stirring by hand and stirring for 1 minute at 1800 rpm. The obtained mixture was permitted to cool down before the addition of PI2074. The mixture was degassed and speed-mixed for 1 minute at 800 rpm to remove entrained air.

Curing Evaluation: The curing of the formulations was monitored by dielectric analysis (DEA) in which a fixed amount of each formulation was placed between two electrodes and an identical sinusoidal AC voltage was applied across the electrodes. This creates an electric field which causes the ions in the materials to migrate from one electrode to the other. During the curing process, the mobility of ions and rotation of dipoles will become more limited, leading to changes in the amplitude of the obtained signals. Since ion conductivity is related to the ion mobility which is related to the material's viscosity, ion conductivity and its reciprocal value ion viscosity are good indicators of the viscosity change during the cure process. In this DEA analysis, the dielectric properties of permittivity and loss factor can be obtained for each sample as curing proceeds.

The results of the tests performed on the exemplary formulations are provided in Table 2 below. That Table also includes further standard testing methodology where applicable. For completeness, the exemplary formulations were each cured by: i) exposing the applied formulations to radiation of a wavelength of 365 nm for a 3 second duration at an intensity of 1000 mW/cm²; and, ii) subsequently exposing the applied formulations to radiation of a wavelength of 850 nm for a 10 second duration operating at 12W and a distance of 5mm. A FireJet^{™} FJ200, available from Phoseon Technology Inc, was used for this irradiation step.

**Table 2**

| TEST | FM. A | FM. B | FM. C | FM. D | FM. E | CF. F | CF. G | CF. H | CF. I |
|---|---|---|---|---|---|---|---|---|---|
| Change of ion viscosity (log Ohm.cm) | 1.35 | 1.46 | 1.43 | 0.98 | 1.28 | 0.40 | 1.14 | 0.86 | 1.17 |
| Temperature after nIR irradiation (°C) | | 273 | 281 | 289 | 233 | 166 | 77 | 146 | 46 |

As regards Table 2, the larger the change of the ion viscosity, the higher the degree of cure obtained. It is noticeable that only the formulations that contain the nIR dye get very hot during the nIR cure: it is considered that this high temperature in turn facilitates high monomer conversion.

In view of the foregoing description and examples, it will be apparent to those skilled in the art that equivalent modifications thereof can be made without departing from the scope of the claims.

## Claims

1. A photo-curable adhesive or sealant composition comprising, based on the weight of the composition:
from 5 to 10 wt.% of a) at least one oxetane compound according to Formula (I) below: 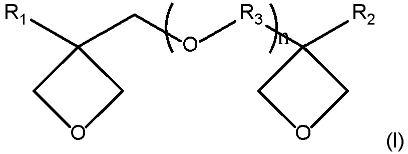 wherein:
R¹ and R² are H, C₁-C₆ alkyl, C₆-C₁₈ aryl or C₇-C₁₈ aralkyl;
each R³ is independently a C₁-C₁₂ alkylene group, C₆-C₁₈ arylene group, C₂-C₁₂ alkenylene group or a poly(C₁-C₆ alkyleneoxy) group; and,
n is an integer of from 1 to 3;
from 5 to 15 wt.% of b) at least one epoxide compound, wherein part b) is **characterized in that** at least 50 wt.% of the total weight of epoxide compounds is constituted by b1) at one cycloaliphatic epoxide;
from 0.1 to 5 wt.% of c) at least one ionic photoacid generator;
from 0.1 to 10 wt.% of d) at least one free radical photoinitiator;
from 0.01 to 1 wt.% of e) at least one near-infrared absorbing dye; and,
from 50 to 80 wt.% of f) particulate filler.

2. The composition according to claim 1, wherein part a) comprises or consists of an oxetane of Formula (IA): 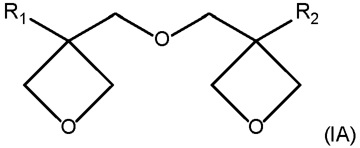 wherein: R¹ and R² are H, C₁-C₆ alkyl, C₆-C₁₈ aryl or C₇-C₁₈ aralkyl.

3. The composition according to claim 2, wherein R¹ and R² in Formula (IA) are both C₁-C₆ alkyl.

4. The composition according to claim 2, wherein part a) comprises or consists of bis[1-ethyl-3-oxentanyl)methyl]ether.

5. The composition according to any one of claims 1 to 4, wherein b1) said at least one cycloaliphatic epoxide compound constitutes at least 65 wt.% of said part b).

6. The composition according to any one of claims 1 to 5, wherein said cycloaliphatic epoxide is selected from the group consisting of bis(3,4-epoxycyclohexylmethyl) adipate, bis(3,4-epoxy-6-methylcyclohexylmethyl) adipate, bis(2,3-epoxycyclopentyl) ether, 3,4-epoxycyclohexylmethyl-3',4'-epoxycyclohexanecarboxylate and mixtures thereof.

7. The composition according to any one of claims 1 to 6, wherein part b) comprise at least one glycidoxy alkyl alkoxy silane having the formula: 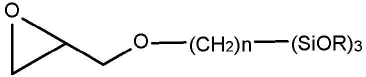 wherein:
each R is independently selected from methyl or ethyl; and,
n is from 1-10, preferably from 1 to 8.

8. The composition according to any one of claims 1 to 7, wherein the or each near-infrared absorbing dye in the composition is un-reactive with said at least one photoacid generator.

9. The composition according to any one of claims 1 to 8, wherein part f) comprises or consists of amorphous silica particles having an average particle diameter (d50) of from 5 to 100 µm, preferably from 5 to 50 µm, as measured by laser diffraction.

10. Use of the adhesive or sealant composition as defined in any one of claims 1 to 9 in an optoelectronic or opto-mechanical device.

11. A bonded structure comprising:
a first material layer; and,
a second material layer;
wherein a cured adhesive composition as defined in any one of claims 1 to 9 is disposed between and contacts said first and second material layers.

## Patentansprüche

1. Photohärtbare Klebstoff- oder Dichtungsmaterialzusammensetzung, umfassend, basierend auf dem Gewicht der Zusammensetzung:
von zu 5 bis 10 Gew.-% a) mindestens eine Oxetanverbindung gemäß nachstehender Formel (I): 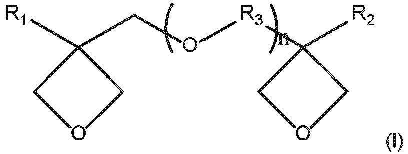
wobei: R¹ and R² H, C₁-C₆-Alkyl, C₆-C₁₈-Aryl oder C₇-C₁₈-Aralkyl sind;
jedes R³ unabhängig voneinander eine C₁-C₁₂-Alkylengruppe, C₆-C₁₈-Arylengruppe, C₂-C₁₂-Alkenylengruppe oder eine Poly-(C₁-C₆-Alkylenoxy)gruppe ist; und
n eine ganze Zahl von 1 bis 3 ist;
von zu 5 bis 15 Gew.-% b) mindestens eine Epoxidverbindung, wobei Teil b) **dadurch gekennzeichnet ist, dass** mindestens 50 Gew.-% des Gesamtgewichts der Epoxidverbindungen aus b1) mindestens einem cycloaliphatischen Epoxid gebildet sind;
von zu 0,1 bis 5 Gew.-% c) mindestens einen lonenphotosäuregenerator;
von zu 0,1 bis 10 Gew.-% d) mindestens einen Radikalphotoinitiator;
von zu 0,01 bis 1 Gew.-% e) mindestens einen Nahinfrarotabsorptionsfarbstoff; und
von zu 50 bis 80 Gew.-% f) einen teilchenförmigen Füllstoff.

2. Zusammensetzung nach Anspruch 1, wobei Teil a) ein Oxetan von Formel (IA) umfasst oder aus diesem besteht: 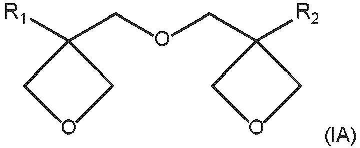 wobei: R¹ and R² H, C₁-C₆-Alkyl, C₆-C₁₈-Aryl oder C₇-C₁₈-Aralkyl sind.

3. Zusammensetzung nach Anspruch 2, wobei R¹ und R² in Formel (IA) beide C₁-C₆-Alkyl sind.

4. Zusammensetzung nach Anspruch 2, wobei Teil a) Bis-[1-ethyl-3-oxentanyl)methyl]ether umfasst oder aus diesem besteht.

5. Zusammensetzung nach einem der Ansprüche 1 bis 4, wobei b1) die mindestens eine cycloaliphatische Epoxidverbindung mindestens 65 Gew.-% des Teils b) bildet.

6. Zusammensetzung nach einem der Ansprüche 1 bis 5, wobei das cycloaliphatische Epoxid aus der Gruppe ausgewählt ist, bestehend aus Bis-(3,4-epoxycyclohexylmethyl)adipat, Bis-(3,4-epoxy-6-methylcyclohexylmethyl)adipat, Bis-(2,3-epoxycyclopentyl)ether, 3,4-Epoxycyclohexylmethyl-3',4'-epoxycyclohexancarboxylat und Mischungen davon.

7. Zusammensetzung nach einem der Ansprüche 1 bis 6, wobei Teil b) mindestens ein Glycidoxyalkylalkoxysilan umfasst, das die Formel aufweist: 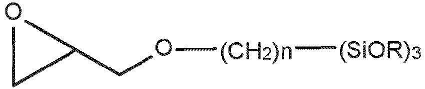
wobei: jedes R unabhängig voneinander aus Methyl oder Ethyl ausgewählt ist; und
n von 1-10, bevorzugt von 1 bis 8, beträgt.

8. Zusammensetzung nach einem der Ansprüche 1 bis 7, wobei der oder jeder Nahinfrarotabsorptionsfarbstoff in der Zusammensetzung mit dem mindestens einen Photosäuregenerator reaktionsunfähig ist.

9. Zusammensetzung nach einem der Ansprüche 1 bis 8, wobei Teil f) amorphe Kieselsäureteilchen umfasst oder aus diesen besteht, die einen durchschnittlichen Teilchendurchmesser (d50) von 5 bis 100 µm, vorzugsweise von 5 bis 50 µm, gemessen durch Laserbeugung, aufweisen.

10. Verwendung der Klebstoff- oder Dichtungsmaterialzusammensetzung, wie in einem der Ansprüche 1 bis 9 definiert, in einer optoelektronischen oder optomechanischen Vorrichtung.

11. Gebundene Struktur, umfassend:
eine erste Materialschicht; und
eine zweite Materialschicht;
wobei eine gehärtete Klebstoffzusammensetzung, wie in einem der Ansprüche 1 bis 9 definiert, zwischen der ersten und der zweiten Materialschicht angeordnet ist und diese berührt.

## Revendications

1. Composition photodurcissable adhésive ou d'étanchéité comprenant, sur la base du poids de la composition :
de 5 à 10 % en poids de a) au moins un composé oxétane selon la Formule (I) ci-après : 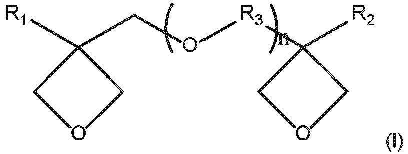
dans laquelle : R¹ et R² sont H, alkyle en C₁-C₆, aryle en C₆-C₁₈ ou aralkyle en C₇-C₁₈ ;
chaque R³ est indépendamment un groupe alkylène en C₁-C₁₂, un groupe arylène en C₆-C₁₈, un groupe alcénylène en C₂-C₁₂ ou un groupe poly(alkylénoxy en C₁-C₆) ; et,
n est un nombre entier allant de 1 à 3 ;
de 5 à 15 % en poids de b) au moins un composé époxyde, dans laquelle la partie b) est **caractérisée en ce qu'**au moins 50 % en poids du poids total des composés époxyde est constitué par b1) au moins un époxyde cycloaliphatique ;
de 0,1 à 5 % en poids de c) au moins un générateur de photoacide ionique ;
de 0,1 à 10 % en poids de d) au moins un photoinitiateur radicalaire ;
de 0,01 à 1 % en poids de e) au moins un colorant absorbant les infrarouges proches ; et,
de 50 à 80 % en poids de f) charge particulaire.

2. Composition selon la revendication 1, dans laquelle la partie a) comprend ou consiste en un oxétane de Formule (IA) : 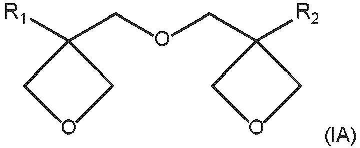 dans laquelle : R¹ et R² sont H, alkyle en C₁-C₆, aryle en C₆-C₁₈ ou aralkyle en C₇-C₁₈.

3. Composition selon la revendication 2, dans laquelle R¹ et R² dans la Formule (IA) sont tous deux alkyle en C₁-C₆.

4. Composition selon la revendication 2, dans laquelle la partie a) comprend ou consiste en du bis[1-éthyl-3-oxétanyle)méthyl]éther.

5. Composition selon l'une quelconque des revendications 1 à 4, dans laquelle b1) ledit au moins un composé époxyde cycloaliphatique constitue au moins 65 % en poids de ladite partie b).

6. Composition selon l'une quelconque des revendications 1 à 5, dans laquelle ledit époxyde cycloaliphatique est choisi dans le groupe constitué d'adipate de bis(3,4-époxycyclohexylméthyle), adipate de bis(3,4-époxy-6-méthylcyclohexylméthyle), éther de bis(2,3-époxycyclopentyle), 3,4-époxycyclohexylméthyl-3',4'-époxycyclohexanecarboxylate et mélanges de ceux-ci.

7. Composition selon l'une quelconque des revendications 1 à 6, dans laquelle la partie b) comprend au moins un glycidoxy alkyl alcoxy silane ayant la formule : 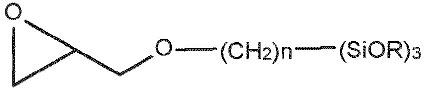
dans laquelle : chaque R est choisi indépendamment parmi méthyle ou éthyle ; et,
n vaut de 1 à 10, de préférence de 1 à 8.

8. Composition selon l'une quelconque des revendications 1 à 7, dans laquelle le ou chaque colorant absorbant dans les infrarouges proches dans la composition ne réagit pas avec ledit au moins un générateur de photoacide.

9. Composition selon l'une quelconque des revendications 1 à 8, dans laquelle la partie f) comprend ou consiste en des particules de silice amorphe ayant un diamètre moyen de particule (d50) allant de 5 à 100 µm, de préférence de 5 à 50 µm, tel que mesuré par diffraction laser.

10. Utilisation de la composition adhésive ou d'étanchéité selon l'une quelconque des revendications 1 à 9 dans un dispositif optoélectronique ou opto-mécanique.

11. Structure collée comprenant :
une première couche de matériau ; et,
une seconde couche de matériau ;
dans laquelle une composition adhésive durcie selon l'une quelconque des revendications 1 à 9 est disposée entre lesdites première et seconde couches de matériau et est en contact avec celles-ci.
